**Europäisches Patentamt**

**European Patent Office**

**Office européen des brevets**

(11) Veröffentlichungsnummer : **0 357 717 B1**

(12) **EUROPÄISCHE PATENTSCHRIFT**

(45) Veröffentlichungstag der Patentschrift :
05.08.92 Patentblatt 92/32

(51) Int. Cl.⁵ : **G01L 9/00**

(21) Anmeldenummer : **89902259.4**

(22) Anmeldetag : **15.02.89**

(86) Internationale Anmeldenummer :
**PCT/EP89/00138**

(87) Internationale Veröffentlichungsnummer :
**WO 89/08243 08.09.89 Gazette 89/21**

(54) **DRUCKMESSVORRICHTUNG.**

(30) Priorität : **24.02.88 DE 8802411 U**

(43) Veröffentlichungstag der Anmeldung :
**14.03.90 Patentblatt 90/11**

(45) Bekanntmachung des Hinweises auf die
Patenterteilung :
**05.08.92 Patentblatt 92/32**

(84) Benannte Vertragsstaaten :
**DE FR GB IT NL**

(56) Entgegenhaltungen :
**US-A- 4 274 423**
**US-A- 4 683 757**

(73) Patentinhaber : **Keller AG für**
**Druckmesstechnik**
**St.-Galler-Strasse 119**
**CH-8404 Winterthur (CH)**

(72) Erfinder : **KELLER, Hans, W.**
**Burgstr. 142**
**CH-8408 Winterthur (CH)**

(74) Vertreter : **Flach, Dieter Rolf Paul, Dipl.-Phys.**
**et al**
**Patentanwälte Andrae/Flach/Haug/Kneissl**
**Prinzregentenstrasse 24**
**W-8200 Rosenheim (DE)**

**Beschreibung**

Die Erfindung betrifft eine Druckmeßvorrichtung mit einer Druckmeßzelle, insbesondere eine piezoresistive Druckmeßzelle nach dem Oberbegriff des Anspruches 1.

Piezoresistive Druckmeßzellen bzw. -sensoren sind beispielsweise aus der DE-OS 33 44 799.3 bekannt geworden. Sie bestehen in der Regel aus einer dosenförmigen Druckmeßzelle mit auf einer Meßmembran vorgesehenen piezoresistiven Widerständen, wobei die Meßmembran über einen umlaufenden Sockelfuß mit einer darunter befindlichen Basisplatte fest verbunden ist. Die als Siliziumzelle ausgebildete Druckmeßzelle ist insgesamt auf einem Träger aufgebaut. Diese Träger sind meist sog. Glasdurchführungen, durch die die einzelnen zu Anschlußstellen auf der Meßmembran führenden getrenntenLeitungen isoliert hidurchgelegt und an den Anschlußstellen der Druckmeßzelle aufgelötet sind. Die Meßzelle kann so nur in trockener Luft oder in isolierender Flüssigkeit eingesetzt werden. Die Meßzellen werden deshalb in der Regel in ein Stahlgehäuse eingebaut, in dem sie mit einer mediumtrennenden Membran von dem zu messenden elektrisch leitenden, feuchten oder aggressiven Druckmedium getrennt sind.

In dem so gebildeten, die Druckmeßzelle aufnehmenden Meßmembran-Innenraum ist zur weiteren Druckübertragung Öl eingefüllt. In einer derartigen gekapselten ölbefüllten Ausführung werden aber die in der Regel als Gold- oder Aluminiumdrähte ausgeführten Anschlußdrähte sehr stark durch die Erschütterung und Druckstöße beansprucht, so daß die Drähte oft durch Ermüdungsbrüche unterbrochen werden.

In der DE 35 00 613 A1 ist daher eine Anschlußtechnik an der Druckmeßzelle in der sog. TAB-Technik (Tape Automated Bonding) vorgeschlagen worden, bei der um die Anschlußstellen auf der Druckmeßzelle herum zwischen dem Kunststoff-Folienmaterialabschnitt mit den Anschlußdrähten und der Meßmembranoberseite jeweils um einen einzelnen oder aber um mehrere Anschlüsse gemeinsam eine dünne Dichtlippe angebracht ist. Dadurch könnte ohne Übertragungsmembran und ein entsprechendes Übertragungsmembrangehäuse grundsätzlich die Druckmeßzelle direkt in feuchten und leitenden Medien eingesetzt werden. Dieses Verfahren hat sich aber grundsätzlich aufgrund der technisch großen Probleme bei der Aufbringung der dünnen Dichtelemente als nicht günstig erwiesen.

Um die Verwendung eines Stahlgehäuses mit einer Übertragungsmembran zum Schutz der Druckmeßzelle vor dem zu messenden gegebenenfalls aggressiven Druckmedium aus Kostengründen zu vermeiden, ist deshalb auch schon versucht worden, die Meßzellenkontakte auf eine billigere Art zu schützen, so daß sie auch in nichtisolierenden Medien eingesetzt werden können.

Dazu können die Meßzellen heute mit einem Gel, einer hochviskosen Flüssigkeit auf Silikonbasis beispielsweise in einem Beschichtungs- bzw. Bedampfungsverfahren geschützt werden. Es handelt sich hierbei in der Regel um sog. bei Niedertemperaturen verdampfbare, also in der Regel unter 700° verdampfbare Verdampfungsmaterialien, um die häufig aus Aluminium bestehenden Anschlüsse nicht zu beeinträchtigen. Diese Lösung eignet sich für Anwendung in feuchten oder teilweise nassen Medien, aber nur bei relativ kleinen Drücken und vor allem bei nicht abrupten Druckänderungen. Bei abrupten Druckänderungen nämlich kann das Gel aus der Position geschleudert werden. Auch kann unter Druck und Temperatur das Gel die Feuchtigkeit nur bedingt und auf jeden Fall nicht auf Dauer zurückhalten.

Eine gattungsbildende Druckmeßvorrichtung ist aus der US-A-4 274 423 bekannt geworden. Es handelt sich dabei um eine Katheter-Druckmeßvorrichtung. Ein rohrförmiger Gehäusekörper weist dazu eine seitliche Öffnung auf, um hier den Blutdruck zu messen. Im Inneren ist in Längsrichtung des stabförmigen Gehäuses die Druckmeßzelle untergebracht. In Längsrichtung des Gehäuses weist die Druckmeßzelle einen verlängerten Ansatz auf, der sich also quer zu der vom unteren Boden zur obenliegenden Meßzelle verlaufenden Vertikalrichtung der Druckmeßzelle erstreckt. Von diesem verlängerten Ansatz gehen die Anschlußdrähte der Druckmeßzelle ab. Die Meßmembran ist insgesamt durch eine Schutzschicht beispielsweise in Form eines Silizium-Dioxid-Filmes überdeckt und geschützt. Schließlich wird der gesamte Katheter-Hohlraum unterhalb einer mit dem zu messenden Druckmedium in Kontakt stehenden Gehäuseöffnung mit einem druckdurchlässigen elastischen Vergußmaterial bevorzugt in Form von Silikon-Gummi vergossen.

Demgegenüber ist es Aufgabe der vorliegenden Erfindung, eine gegenüber dem zuletzt genannten gattungsbildenden Stand der Technik einfacher aufgebaute Druckmeßvorrichtung zu schaffen, die ebenso ohne zugehörige Übertragungsmembran vor allem auf dem Gebiet der Hydraulik, aber auch in anderen feuchten, leitenden oder gar aggressiven Medien eingesetzt werden kann, in denen insbesondere sehr schnelle und abrupte Druckänderungen auftreten und vorkommen können, wobei die Druckmeßzelle bei einfachem konstruktiven Aufbau problemlos einbaubar und vor allem bei hoher Druckgenauigkeit auch langfristig problemlos verwendbar sein soll.

Die Aufgabe wird erfindungsgemäß entsprechend den im Patentanspruch 1 angegebenen Merkmalen gelöst. Vorteilhafte Ausgestaltungen der Erfindung sind in den abhängigen Ansprüchen angegeben.

Durch die vorliegende Erfindung wird eine Druckmeßvorrichtung mit einer Druckmeßzelle geschaffen, die nicht nur sehr einfach herzustellen ist, sondern die vor allem einen Einsatz in sehr vielen Anwendungen erlaubt, bei denen bisher nur in stahlgekapselte Schutzgehäuse eingebaute Drucksensoren eingesetzt werden konnten. Dabei erlaubt die erfindungsgemäße Druckmeßzelle hohe Meßgenauigkeiten vor allem auch bei schnellen und abrupten Druckänderungen. Ferner sind die Anschlußdrähte an der Druckmeßzelle auch bei starken Erschütterungen und Druckstößen in dem zu messenden Druckmedium sehr gut geschützt, so daß auch ansonsten festzustellende Ermüdungsbrüche vermieden werden. Diese Vorteile werden schließlich ohne Verwendung eines gekapselten Aufbaues mit einer Übertragungsmembran erzielt. Die Druckmeßzelle ist dabei mit einem seitlichen Verlängerungsansatz versehen, der mit einer quer zwischen der Ober- und Unterseite der Druckmeßzelle verlaufenden Standseite auf einem Träger ruht und vom Träger aus nur in einer Teilhöhe vergossen ist.

Die erfindungsgemäße Druckmeßvorrichtung weist eine Druckmeßzelle auf, deren obere in der Regel mit piezoresistiven Widerständen versehene Meßmembran über eine Schutzschicht verfügt, die in der Regel aus widerstandsfähigem und nicht angreifbarem Glas besteht. Im Bereich der Anschlüsse jedoch, wo die Glas-Schutzschicht entfernt oder aber weggelassen ist, ist die Druckmeßzelle vollständig mit einer Vergußmasse eingegossen, um somit die Anschlüsse wie die hier weggehenden Anschlußleitungen gegenüber dem Druckmedium vollständig und sicher abzudichten.

Durch diese Vergußmasse kann auch eine Fixierung und Halterung für die Sensorzelle gewährleistet werden.

Der Träger kann beispielsweise becher- oder boxenförmig gebildet sein, wobei die Vergußmasse vorzugsweise bis zum oberen Umlaufrand des becher- oder boxenförmigen Trägers vergossen wird. Dabei soll die Vergußmasse vorzugsweise nicht nur die Anschlüsse, sondern zusätzlich auch in einem gewissen Bereich die Glasschutzschicht auf der Meßmembran mit überdecken.

Die Vergußmasse kann je nach Einsatzzwecken elastisch, teil- oder leichtelastisch sein oder auch aus hartem unelastischem Material bestehen. Je härter allerdings die Vergußmasse ist, um so eher können durch die Trägeranordnung verursachte Spannungen auf die Druckmeßzelle eingeleitet werden, die vielleicht zu einer gewissen Verfälschung des Meßsignals führen könnten. Dem kann aber problemlos dadurch entgegengewirkt werden, daß die Druckmeßzelle in zumindest einer Seitenrichtung verlängert ausgebildet ist, so daß die an der Trägerfläche anliegende Seitenfläche der Druckmeßzelle möglichst weit von den eigentlichen piezoresistiven Druckmeßelementen entfernt liegt. Hierfür eignen sich insbesondere Harze wie Epoxy.

Aus der DE 36 16 308 A1 ist zwar grundsätzlich auch ein Sensor bekannt geworden, der aber auf den spezifischen Einsatzzweck zur Erfassung von physikalischen Vorgängen im Brennraum einer Brennkraftmaschine ausgerichtet und zugeschnitten ist. Von daher besteht dieser vorbekannte Sensor aus zwei die Meßmembranen umfassende Saphirteilchen aus alpha-kristallinem Aluminiumoxid und nicht wie üblicherweise, wie im vorliegenden Falle auch, aus einem Siliziumplättchen mit der integriert ausgearbeiteten Meßmembran, welches am günstigsten und einfachsten mit einem Glassockel zur Druckmeßzelle verbindbar ist. Darüber hinaus sind bei dem aus der DE 36 16 308 A1 vorbekannten und auf den speziellen Einsatzzweck zur Überwachung des Brennraumes einer Brennkraftmaschine ausgerichteten Sensor auf dessen Meßmembran in der sog. silicon on sapphire-Technologie (SOS-Technologie) die dehnungsempfindlichen Widerstände aufgebracht. Schließlich ist die gesamte Meßmembran mit den darauf befindlichen Widerständen und den Anschlußleitern mittels einer durchgängigen Glasschicht isoliert und geschützt, die gleichzeitig an einem verlängerten Abschnitt den gesamten Sensor umgibt und gleichzeitig als Trag- und Gußmasse den Sensor in einem Gehäuseabschnitt 12 sichert und stützt.

Die Herstellung eines derartig spezifischen Sensors ist aber äußerst schwierig und erfordert eine komplizierte Verbindungsmethode, die schwer handhabbar ist. Die Herstellung ist also technologisch sehr anspruchsvoll und verlangt ein großes Maß an Know-how.

Demgegenüber ist bei der vorliegenden Erfindung die Herstellung des Sensors für den Einsatz bei feuchten Medium, insbesondere in der Hydraulik, Tauchtechnik etc. vergleichsweise einfach bei insgesamt hohem Handhabungs- und Meßkomfort. Die vom Sensor ausgehenden Anschlußdrähte können mittels konventioneller Gold- oder Aluminiumdrähte oder mittels der sog. TAB (Tape Automated Bonding)-Technologie durchgeführt werden, bei der die Leitungsabschnitte auf einem elastisch biegbarem Filmmaterialabschnitt aufgebracht bzw. integriert sind. Insbesondere bei dieser Technik kann in der vorzugsweise aus Epoxy bestehenden Vergußmasse zur Isolierung und Halterung des Sensors auch noch ein elektronischer Print zur Datenauswertung integriert sein. Bei Verwendung als Referenzdruckmesser kann schließlich auch noch ein elastisches Druckrohr bis in das Innere der Druckmeßzelle hinein verlegt sein, welches ebenfalls durch die Vergußmasse fixiert und gehalten wird.

Weitere Vorteile, Einzelheiten und Merkmale der Erfindung werden nachfolgend anhand der beigefügten Zeichnungen näher erläutert. Dabei zeigen im einzelnen:

Figur 1 : eine schematische Längsschnittdarstellung durch ein erstes Ausführungsbeispiel der Druckmeßvorrichtung;

Figur 2 : eine schematische vereinfachte Darstellung in Längsschnittdarstellung;

Figur 3 : ein weiteres Ausführungsbeispiel in Längsschnittdarstellung;

Figur 4 : ein weiteres Ausführungsbeispiel für eine Referenzdruckmessung.

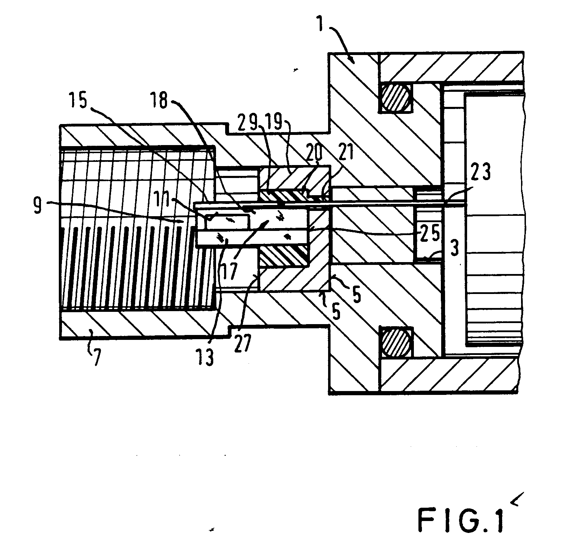

In der beigefügten Figur 1 ist ausschnittsweise ein Gehäuse 1 einer Druckmeßvorrichtung gezeigt, in dem in der Zeichnung rechts liegend beispielsweise auch die elektronische Auswert- und/oder eine Anzeigeeinrichtung vorgesehen sein kann.

An der in Figur 1 dargestellten Gehäusewand ist eine Durchtrittsöffnung 3 und ein Schulteransatz 5 ausgebildet, von dem ein Rohransatz 7 ausgeht, an dem beispielsweise ein Druckschlauch anschließbar ist, über den das zu messende Druckmedium an den Drucksensor 9 herangeführt wird.

Der Drucksensor 9 besteht aus einer piezoresistiven Druckmeßzelle mit z. B. einer oberen Meßmembran 11 aus Silizium, die über einen umlaufenden Sockel mit einer Basisplatte 13 beispielsweise aus Glas fest verbunden ist.

Die auf der oberen Meßmembran 11 vorgesehenen piezoresistiven Sensorelemente sind über eine Schutzschicht, im gezeigten Ausführungsbeispiel mit einer Glasschutzschicht 15 geschützt, die auch einen langfristigen Schutz vor allem auch bei Auftreten von Feuchtigkeit gewährleistet.

Die Druckmeßzelle 9 ist an ihrer einen Seite, also nicht in Richtung ihrer Meßmembran oder in Richtung ihrer Bodenplatte, sondern quer dazu mit einem Verlängerungsansatz 17 versehen, über welchen die Meßmebran 11 auf einem Träger 19 aufliegt. Grundsätzlich kommen für den Träger 19 alle Materialien in Betracht, auch Metall, Metallegierungen, Kunststoff etc. Bevorzugt werden allerdings isolierende Materialien wie beispielsweise geeignete Kunststoffe oder aber vor allem Keramikbzw. Keramikpreßteile, da diese mit optimalen Eigenschaften äußerst billig und preiswert herstellbar sind.

Der Träger 19 weist eine Öffnung bzw. Schlitz 21 an seinem Boden auf, um hier die zur Elektronik führenden Anschlußleitungen 23 hindurchzuführen. Die Anschlußleitungen 23 können im einzelnen durch die Öffnung 21 hindurchgeführt werden oder aber beispielsweise auf einem Kunststoffolienmaterialabschnitt ausgebildet sein. Auch insoweit wird auf den Offenbarungsgehalt der vorbekannten DE-OS 35 00 613 verwiesen.

Der Träger 19 ist topf- bzw. boxenförmig ausgebildet. Der mit seiner Seitenfläche 25 auf dem Boden des becher- bzw. boxenförmigen Trägers 19 eingesetzte Sensor wird dann bis zur Höhe des umlaufenden Randes 27 des Trägers 19 mit Vergußmaterial 29 vergossen. Die Anordnung ist dabei derart, daß die Vergußmasse 29 die auf der Oberseite der Druckmeßzelle 9 ausgebildeten Anschlußstellen, an denen die Glasschutzschicht entfernt oder von Anfang an weggelassen worden ist und von der die Anschlußleitungen 23 ausgehen, völlig überdeckt, um hier eine hermetische Abdichtung zu gewährleisten. Dabei überdeckt in einem bestimmten Überlappungsbereich die Vergußmasse 29 auch noch die Glasschutzschicht 15, um einen optimalen Schutz zu gewährleisten.

Die Höhe des umlaufenden Randes 27 vereinfacht dabei auch das Einbringen der Vergußmasse 29, da hierdurch eine Höhenanzeige gewährleistet ist, bei deren Auffüllen die Anschlußstellen sicher mit Vergußmasse überdeckt werden.

Durch die Vergußmasse wird auch der Öffnungsschlitz 21 am Boden des Trägers 19 mit ausgegossen. Schließlich kann auf der Bodenunterseite des Trägers 19 in der Durchtrittsöffnung 3 der Gehäusewand 1 noch ergänzend und zusätzlich weitere Vergußmasse 29 eingespritzt sein.

Als Vergußmasse eignen sich alle bekannten Materialien, z.B. Harze, Epoxyharze, Silikonkautschukmassen etc. Die Vergußmassen können dabei hart oder aber auch elastisch oder teilelastisch sein. Je höher der Verlängerungsansatz 17 und damit der Abstand der eigentlichen mit den piezoresistiven Drucksensor-Elementen versehenen Meßmembran zur Vergußmasse ist, desto geringer sind die möglichen Gefahren, daß über den Träger bzw. die Vergußmasse Spannungen und damit Fehlersignale auf den Drucksensor eingeleitet werden können. Eine Anpassung kann auch entsprechend den gewünschten Einsatzbedingungen vorgenommen werden.

Im übrigen ergibt sich durch den konstruktiven Aufbau problemlos auch eine vollständige hermetische Abdichtung eines Gehäuseinnenraumes gegenüber dem Sensor. Dabei kann zusätzlich noch der Träger im Rohransatz 7 bzw. am Schulteransatz 5 mit abgedichtet, eingepaßt und/oder verklebt sein, um hier die Abdichtung gegenüber dem Gehäuse noch zu verbessern.

Der nur in Seiten- und nicht auch in Draufsicht gezeigte Drucksensor 9 kann beliebige gewünschte Umrißformen aufweisen. Im gezeigten Falle kommt beispielsweise eine in Draufsicht rechteckförmige Gestaltung in Betracht, so daß dadurch die quer zur Längsrichtung verlaufende Seitenfläche 25 gebildet ist, auf der der Sensor 9 auf dem Träger 19 aufliegt.

Gleichwohl ist aber auch beispielsweise eine in Draufsicht dosenförmige runde Gestaltung des Sensors 9 möglich, wobei sich dann empfiehlt, ein Kreissegment unter Bildung einer ebenen Anlagefläche 25 wegzulassen. Auch in diesem zuletzt genannten Falle einer dosenförmigen Gestaltung des Sensors 9 kann der eigentliche Meßbereich grundsätzlich durchaus zentrisch ausgebildet sein. Vorzuziehen ist aber eine azentrische Anordnung, so daß bei geringerem Materialaufwand der Abstand zwischen der Seitenfläche 25 zu dem eigentlichen Meßbereich möglichst groß ist.

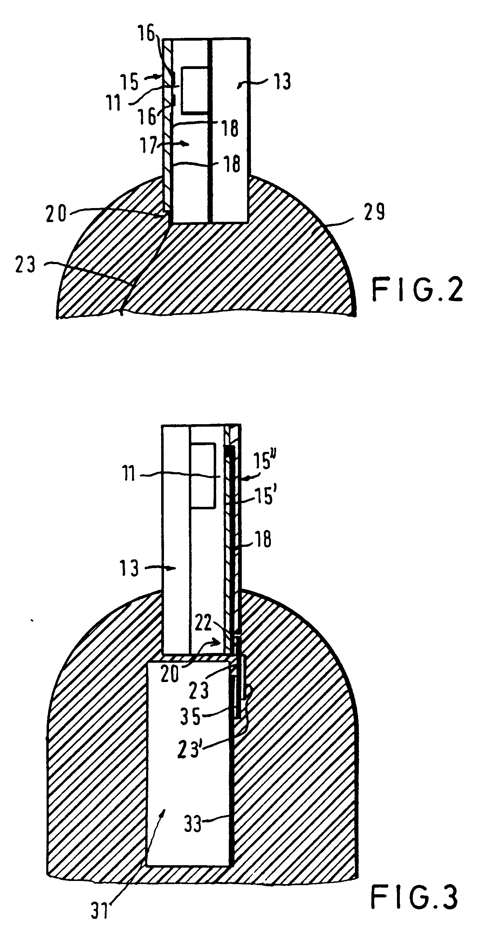

In Figur 2 ist eine schematische Abwandlung insofern gezeigt, als hier der Sensor über einen harten Kleber, beispielsweise in Form von Epoxy, an seinem verlängerten Ansatz 17 vergossen und ohne direkte Berührung auf einem Träger ausgeführt ist. Aber auch hier sind, wie in Figur 1 gezeigt, die im Bereich der Meßmembran 11 vorgesehenen Widerstände 16 über Metallverbindungen 18 mit den entsprechenden Anschlüssen im Kontaktbereich 20 des Verlängersansatzes 17 versehen, an dem dann die z. B. in Form herkömmlicher Gold- oder Aluminiumdrähte als Anschlußleitung 23 angelötet sein können. Die Anschlußstellen für die Anschlußleitungen 23 am Kontaktbereich 20 sind ohne die Glas-Schutzschicht 15 ausgebildet.

Bei der Ausführungsform gemäß Figur 3 wird der Aufbau im genaueren Detail beispielsweise unter Verwendung eines elektronischen Printes 31 gezeigt. Mit einer ersten Glasschutzschicht 15′ ist die Membran 11 mit Ausnahme einer Anschlußöffnung überdeckt, von der die Metallverbindungen 18, die durch die äußere Glasschutzschicht 15″ überdeckt sind, von den Widerständen 16 zum Kontaktbereich 20 ausgehen. Im Kontaktbereich 20 wird über eine erste Zinnlötung 22 zu den in Form von Metallisierungen auf einem Folienmaterialabschnitt 23′ aus gebildeten Anschlußleitungen 23 und davon über eine zweite Zinnlötung 35 eine Verbindung zu den auf dem Print 31 ausgebildeten Metalleitern 33 hergestellt. Es handelt sich hierbei um die sog. TAB-(Tape automatic bonding)Technologie, bei der die Anschlußleitungen 23 über das eigentliche Plastikmaterial zur Vereinfachung der Lötung überstehen können.

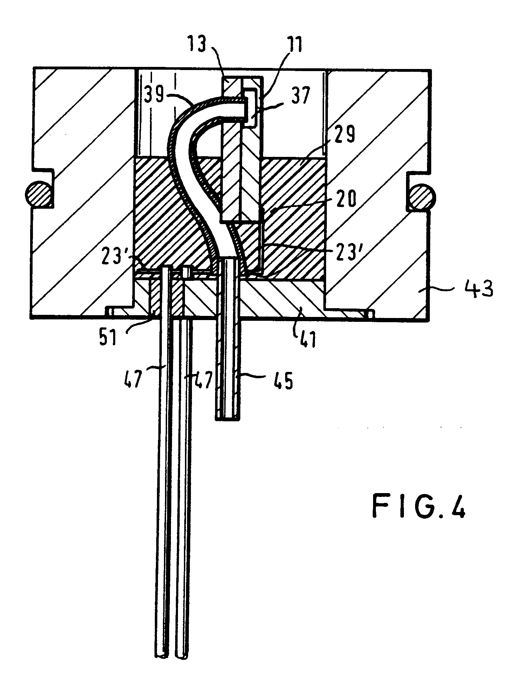

In Figur 4 schließlich ist ein Ausführungsbeispiel gezeigt, bei dem der Sensor auch als Referenzdruckmesser eingesetzt werden kann. Der Innenraum 37 der Meßzelle ist mit einem Loch in der Basisplatte 13 versehen, durch welches ein flexibler Schlauch 39, vorzugsweise ein Plastikschlauch, in das Innere der Meßzelle eingeführt und hermetisch abgedichtet ist. Der Schlauch kann aus einem hochelastischen Silikonschlauch von 1 mm Durchmesser bestehen, der beispielsweise über einen Silikonkleber z. B. gemäß der Marke "Dow Corning 96083" heiß härtend verklebt werden kann. Der elatische Schlauch 39 ist zu einem durch die Basisplatte 41 eines offenen Gehäusetopfes geführt und wird durch das Vergußmaterial 29 gemeinsam mit dem Sensor umgossen.

Durch die eigentliche Basisplatte 41 ist ein festes Rohr 45 geführt und dicht verankert, so daß der flexible Schlauch 39 auf das über die Basisplatte 41 geringfügig überstehende feste Rohr aufgesteckt werden kann.

Bei Verwendung des Sensors als Absolutdruckmesser ohne den flexiblen Schlauch 39 kann der Aufbau bei ansonsten verschlossener Meßmembran ähnlich sein. In diesem wie im Falle des Referenzdruckmessers ist in dem Ausführunosbeispiel gemäß Figur 4 der Sensor mittels der vorstehend genannten TAB-Technik unter Verwendung von auf einem flexiblen Folienmaterialabschnitt 23′ vorgesehenen Anschlußleitungen 23 mit Glasdurchführungsdrähten 47 verbunden und an diese angelötet. Diese Glasdurchführungsdrähte führen durch entsprechende Bohrungen in der aus Stahl bestehenden Basisplatte 41, auch Glasdurchführungs-Sockel genannt, von dem sie durch das erwähnte Glas 51 isoliert sind. Der Sockel ist in das offene Gehäuse 43 an einem umlaufenden Schulterring angeschweißt. Der so gebildete Gehäusetopf wird, wie bereits erwähnt, mit der Vergußmasse, vorzugsweise einem harten Epoxy-Kleber vergossen.

Die besonders günstigen und geeigneten Epoxy-Harze sind beispielsweise in der COB (Chip On Board)-Technik bekannt und bewährt. Besonders günstig ist dabei eine Vergußmasse der Marke "Epotec 353ND". Es garantiert durch seine angepaßte Temperaturausdehnung eine minimale Ausfallrate von Drahtrissen auch bei feinsten Drähten.

Die gezeigten Ausführungsbeispiele wurden anhand einer Meßmembran bestehend aus Silizium und einer Basisplatte bestehend aus einem Glassockel erläutert. Es können aber auch Materialien wie Silizium-Silizium, Saphir-Glas oder Saphir-Silizium oder irgendwelche andere geeignete Materialien oder Aufbauten in Betracht kommen, bei denen die Leitungsdrähte zu den Sensorwiderständen sowie die Sensorwiderstände selbst durch Isolieren der Schichten abgedeckt sind.

## Patentansprüche

1. Druckmeßvorrichtung mit einer Druckmeßzelle, insbesondere piezoresistiven Druckmeßzelle, die durch eine obenliegende Meßmembran (11) und eine damit verbundene untere Basisplatte (13) gebildet und in einer zu der von der Unterseite zu der Oberseite der Druckmeßzelle (9) verlaufenden Vertikalrichtung sich quer erstreckenden Seitenrichtung mit einem Verlängerungsansatz (17) versehen ist, an welchem die auf der Druckmeßzelle (9) vorgesehenen Anschlüsse liegen, von denen elektrische Anschlußleitungen (23) abgehen, wobei die Druckmeßzelle (9) zumindest im Bereich ihrer auf der Außenseite der Meßmembran (11) vorgesehenen Sensorelemente mit einer vorzugsweise aus Glas bestehenden Schutzschicht (15) vorgesehen ist, die im Kontaktbereich (20) der zur Meßmembran (11) versetzt liegenden Anschlüsse entfernt oder weggelassen ist, wobei die Anschlüsse mit glasfreiem Vergußmaterial überdeckt sind, **dadurch gekennzeichnet,** daß die Druckmeßzelle (9) in ihrem Kontaktbereich (20) in einer Teilhöhe der querliegenden Seitenrichtung mit dem glasfreien Vergußmaterial (29) umgossen ist, wodurch die Druckmeßzelle (9) nur an ihrem Verlängerungsansatz (17) mittels des glasfreien Vergußmaterials (29) fixiert und gehalten und gegenüber einem Träger (19) abgestützt ist.

2. Druckmeßvorrichtung nach Anspruch 1, **dadurch gekennzeichnet,** daß die Druckmeßzelle (11) mit einer Seitenfläche (25) ihres Verlängerungsansatzes (17) auf dem Träger (19) aufliegt, der becher- oder boxenförmig ausgebildet ist und der die über seinen oberen Rand (27) überstehende Druckmeßzelle (9) in einem Teilhöhenbereich aufnimmt.

3. Druckmeßvorrichtung nach Anspruch 1 oder 2, **dadurch gekennzeichnet,** daß der die querliegende Druckmeßzelle (9) in einem Teilhöhenbereich versetzt zur Meßmembran (11) aufnehmende becher- bzw. boxenförmige Träger (19) bis zu seinem umlaufenden Rand (27) mit glasfreiem Vergußmaterial (29) gefüllt ist.

4. Druckmeßvorrichtung nach einem der Ansprüche 1 bis 3, **dadurch gekennzeichnet,** daß das Vergußmaterial (29) die vorzugsweise aus Glas bestehende Schutzschicht (15) in einem zur Meßmembran (11) versetzt liegenden Bereich überdeckt.

5. Druckmeßvorrichtung nach einem der Ansprüche 1 bis 4, **dadurch gekennzeichnet,** daß der Boden des Trägers (19) mit einer Öffnung bzw. einem Schlitz (21) zur Durchführung der Anschlußleitungen (23) versehen ist.

6. Druckmeßvorrichtung nach Anspruch 5, **dadurch gekennzeichnet,** daß auch die Öffnung bzw, der Schlitz (21) mit Vergußmaterial (29) abgedichtet ist.

7. Druckmeßvorrichtung nach einem der Ansprüche 1 bis 6, **dadurch gekennzeichnet,** daß der Träger (19) eine in einem anliegenden Gehäuse (1) vorgesehene Durchtrittsöffnung (3) zur weiteren Durchführung der Anschlußleitungen (23) überdeckt.

8. Druckmeßvorrichtung nach Anspruch 7, **dadurch gekennzeichnet,** daß auch die im Gehäuse (1) vorgesehene Durchtrittsöffnung (3) auf der zur Druckmeßzelle (9) gegenüberliegenden Seite des Trägers (19) mit Vergußmaterial (29) ausgespritzt ist.

9. Druckmeßvorrichtung nach einem der Ansprüche 1 bis 8, **dadurch gekennzeichnet,** daß die Druckmeßzelle (9) benachbart zu der dem Träger (19) zugewandten Seitenfläche (25) zumindest an zwei Seiten, vorzugsweise umlaufend an allen Seiten mit Vergußmaterial (29) umspritzt ist.

10. Druckmeßvorrichtung nach einem der Ansprüche 1 bis 9, **dadurch gekennzeichnet,** daß die Anschlußleitungen (23) vom Kontaktbereich (20) ausgehend auf einem Kunststoff-Folienmaterialabschnitt (23′) ausgebildet sind.

11. Druckmeßvorrichtung nach einem der Ansprüche 1 bis 10, **dadurch gekennzeichnet,** daß die Anschlußleitung (23) zu Glasdurchführungsdrähten (47) führen, die ebenfalls noch von dem glasfreien Vergußmaterial (29) im Bereich ihrer Verbindungsstellen zu den Anschlußdrähten (23) umgossen sind.

12. Druckmeßvorrichtung nach einem der Ansprüche 1 bis 11, **dadurch gekennzeichnet,** daß die Anschlußleitungen (23) zu einer elektronischen Schaltung (31) zur Signalaufbereitung und -verarbeitung führen, die ebenfalls mit dem glasfreien Vergußmaterial (29) semeinsam mitvergossen ist.

13. Druckmeßvorrichtung nach einem der Ansprüche 1 bis 12, **dadurch gekennzeichnet,** daß die Druckmeßzelle (9) als Referenzdruck-Meßzelle ausgebildet ist und in Inneren der Druckmeßzelle (9) ein Innenraum gebildet ist, der an ein Referenzdruck-Rohr (39, 45) angeschlossen ist, welches zumindest teilweise ebenfalls durch das Vergußmaterial (29) umgossen und fixiert ist.

14. Druckmeßvorrichtung nach Anspruch 13, **dadurch gekennzeichnet,** daß im Inneren der Druckmeßzelle (9) ein Innenraum (37) gebildet ist, der über einen flexiblen Schlauch (39) mit einem Referenzdruck beaufschlagbar ist, wobei der flexible Schlauch (39) zu einem festen Rohr (45) führt, welches durch eine, einen Teil des Trägers bildenden Basisplatte (41) hindurchführt.

15. Druckmeßvorrichtung nach Anspruch 14, **dadurch gekennzeichnet,** daß zumindest der Anschlußbereich des flexiblen Schlauches (39) am über die Basisplatte (41) überstehenden Ende des festen Rohres (45) durch glasfreies Vergußmaterial (29) mitumgossen ist.

16. Druckimeßvorrichtung nach Anspruch 14 oder 15 **dadurch gekennzeichnet,** daß durch die Basisplatte (41) auch die Glasdurchführungsdrähte (47) voneinander isoliert hindurchgeführt sind.

17. Druckmeßvorrichtung nach einem der Ansprüche 1 bis 16, **dadurch gekennzeichnet,** daß die glasfreie Vergußmasse aus Epoxyharz, insbesondere hartem Epoxyharz besteht.

## Claims

1. A pressure measuring device comprising a pressure measuring cell, more particularly in the form of a piezoresistive pressure measuring cell, which is formed by an upper responsive membrane (11) and a lower base plate (13) connected with the same and in a lateral direction extending transversely in relation to the vertical direction extending from the lower side to the upper side of the pressure measuring cell is provided with an extension head (17), against which the connections provided on the pressure measuring cell (9) rest, from which electrical connection leads (23) run, the pressure measuring cell (9) at least adjacent to its sensor elements provided on the outer side of the membrane (11) being provided with a glass protective layer (15) preferably consisting of glass, which layer is removed or omitted in the contact part (20) of the connections, which are offset in relation to the responsive membrane (11), the connections being covered over with glass-free potting material, **characterized in that** in its contact part (20) and for part of the height of the transversely extending lateral direction the pressure measuring cell (9) has such glass-free potting material (29) around it so that the pressure measuring cell (9) is only retained and held at its extension head (17) by means of the glass-free potting material (29) and is supported in relation to a carrier (19).

2. The pressure measuring device as claimed in claim 1, **characterized in that** the pressure measuring cell (11) has a lateral surface (25) of its extension head (17) resting on the carrier (19), which is designed in the form of a cup or box and which receives the pressure measuring cell (9), extending past its upper edge (27) for part of its height.

3. The pressure measuring device as claimed in claim 1 or in claim 2, **characterized in that** the cup- or box-like carrier (19) receiving, with an offset and for part of its height in relation to the responsive membrane (11), the transversely arranged pressure measuring cell (9) is filled as far as its surrounding edge (27) with glass-free potting material (29).

4. The pressure measuring device as claimed in any one of the preceding claims 1 through 3, **characterized in that** the potting material (29) covers over the protective layer (15) preferably consisting of glass, in a part which is offset in relation to the responsive membrane (11).

5. The pressure measuring device as claimed in any one of the claims 1 through 4, **characterized in that** the floor of the carrier (19) is provided with an opening or respectively a slot (21) for the passage of connection leads (23).

6. The pressure measuring device as claimed in claim 5, **characterized in that** the opening or respectively the slot (21) as well is sealed with potting material (29)

7. The pressure measuring device as claimed in any one of the preceding claims 1 through 6, **characterized in that** the carrier (19) covers over a passage opening (3) provided in an adjacent housing for the further passage of the connection leads (23).

8. The pressure measuring device as claimed in claim 7, **characterized in that** furthermore the passage opening (3) provided in the housing (1) is lined by sprayed potting material (29) on the side of the carrier (19) opposite to the pressure measuring cell (9).

9. The pressure measuring device as claimed in any one of the preceding claims 1 through 8, **characterized in that** adjacent to the lateral surface (25) facing the carrier (19) the pressure measuring cell (9) is covered by sprayed potting material (29) on at least two sides and preferably circumferentially on all sides.

10. The pressure measuring device as claimed in any one of the claims 1 through 9, **characterized in that** the connection leads (23) running from the contact part (20) are formed on a section (23') of synthetic resin film material.

11. The pressure measuring device as claimed in any one of the claims 1 through 10, **characterized in that** the connection lead (23) run to glass leadthrough wires (47) which as well have the glass-free potting material (29) cast around them where they are connected with the connection leads (23).

12. The pressure measuring device as claimed in any one of the claims 1 through 11, **characterized in that** the connection leads (23) lead to an electronic circuit (31) for processing and preparing signals, which circuit is also potted with the glass-free potting material (29) jointly.

13. The pressure measuring device as claimed in any one of the claims 1 through 12, **characterized in that** pressure measuring cell (9) is in the form of a reference pressure measuring cell and in the interior of the pressure measuring (9) an internal space is formed, which is connected with a reference pressure tube (39 and 45), which is at least partly also potted by the potting material (29) and so held in place.

14. The pressure measuring device as claimed in claim 13, **characterized in that** in the interior of the pressure measuring cell (9) an internal space (37) is formed, which is adapted to be supplied with a reference pressure via a flexible hose (39), the flexible hose (35) leading to a stiff tube (45), which is led through a base plate (41) constituting a part of the carrier.

15. The pressure measuring device as claimed in claim 14, **characterized in that** at least the connection part of the flexible hose (39) is potted in place as well using glass-free potting material (29) at the end, projecting past the base plate (41), of the stiff tube (45).

16. The pressure measuring device as claimed in claim 14 or in claim 15, **characterized in that** furthermore the glass leadthrough wires (47) are extended through the base plate (41) and insulated from each other.

17. The pressure measuring device as claimed in any one of the preceding claims 1 through 16, **characterized in that** the glass-free potting composition consists of an epoxy resin and more particularly rigid epoxy resin.

**Revendications**

1. Dispositif de mesure de pression avec une cellule de mesure de pression, et en particulier une cellule de mesure de pression à piézorésistance qui est constituée par une membrane de mesure supérieure (11) et une plaque de base inférieure (13) assemblée à celle-ci et qui est pourvue d'une rallonge (17) s'étendant en direction latérale transversalement par rapport à la direction verticale de la face inférieure à la face supérieure de la cellule de mesure de pression (9), cette rallonge portant les raccordement prévus à la cellule de mesure de pression (9) dont partent les conducteurs de raccordement électriques (23)tandis que la cellule de mesure de pression (9) est pourvue, au moins dans la région de ses éléments de capteurs prévue sur la face extérieure de la membrane de mesure (11), d'une couche de protection (15) réalisée de préférence en verre qui est écartée ou supprimée dans la zone de contact (20) des raccordements décalés par rapport à la membrane de mesure (11) tandis que les raccordements sont recouverts d'une masse de coulée exempte de verre, **caractérisé en ce que** la cellule de mesure de pression (9) est enrobée par la masse de coulée (29) exempte de verre dans la zone de contact (20) sur une partie de la hauteur de la direction latérale transversale, si bien que la cellule de mesure de pression (9) est fixée et maintenue uniquement par sa rallonge (17) au moyen du matériau de coulée exempt de verre (29) et est supportée par rapport à un support (19).

2. Dispositif de mesure de pression selon la revendication 1, **caractérisé en ce que** la cellule de mesure de pression (11) repose par la face latérale (25) de sa rallonge (17) sur le support (19) qui a une forme de cuvette ou de boîte et qui reçoit la cellule de mesure de pression (9) faisant saillie par-dessus son bord supérieur (27) dans une partie de sa hauteur,

3. Dispositif de mesure de pression selon la revendication 1 ou 2, **caractérisé en ce que** le support (19) en forme de cuvette ou de boîte recevant la cellule de mesure de pression (9) disposée transversalement sur une partie de sa hauteur avec décalage par rapport à la membrane de mesure (11) est rempli de matériau de coulée (29) exempt de verre jusqu'à son bord périphérique (27).

4. Dispositif de mesure de pression selon l'une des revendications 1 à 3, **caractérisé en ce que** la masse de coulée (29) recouvre la couche de protection (15) constituée de préférence de verre dans une région décalée par rapport à la membrane de mesure (11),

5. Dispositif de mesure de pression selon l'une des revendications 1 à 4, **caractérisé en ce que** le fond du support (19) est pourvu d'un orifice ou d'une fente (21) permettant le passage des conducteurs de raccordement (23).

6. Dispositif de mesure de pression selon la revendication 5, **caractérisé en ce que** l'orifice ou la fente (21) est fermé de manière étanche par la masse de coulée (29).

7. Dispositif de mesure de pression selon l'une des revendications 1 à 6, **caractérisé en ce que** le support (19) recouvre un orifice de passage (3) prévu dans un boîtier voisin (1) et permettant le passage ultérieur des conducteurs de raccordement (23).

8. Dispositif de mesure de pression selon la revendication 7, **caractérisé en ce que** l'orifice de passage (3) prévu dans le boîtier (1) est revêtu de masse de coulée (29) sur le côté du support (19) opposé à la cellule de mesure de pression (9).

9. Dispositif de mesure de pression selon l'une des revendications 1 à 8, **caractérisé en ce que** la cellule de mesure de pression (9) est revêtue de masse de coulée (29) au moins sur deux côtés, et de préférence tout autour et sur tous les côtés, à proximité de la face latérale (25) tournée vers le support (19).

10. Dispositif de mesure de pression selon l'une des revendications 1 à 9, **caractérisé en ce que** les conducteurs de raccordement (23) sont constitués depuis la région de contact (20) d'une section de matériau en feuilles de plastique (23').

11. Dispositif de mesure de pression selon l'une des revendications 1 à 10, **caractérisé en ce que** les conducteurs de raccordement (23) mènent à des fils de passage à travers le verre (27) qui sont également enrobés de la masse de coulée (29) exempte de verre dans la zone de ses points de jonction aux fils de raccordement (23).

12. Dispositif de mesure de pression selon l'une des revendications 1 à 11, **caractérisé en ce que** les conducteurs de raccordement (23) mènent à un circuit électronique (31) pour la génération et le traitement de signaux, celui-ci étant également enrobé simultanément de masse de coulée (29) exempte de verre.

13. Dispositif de mesure de pression selon l'une des revendications 1 à 12, **caractérisé en ce que** la cellule de mesure de pression (9) se présente sous forme d'une cellule de mesure de pression de référence et qu'il existe, à l'intérieur de la cellule de mesure de référence (9), un espace intérieur raccordé à un tube de pression de référence (39, 45) qui est également enrobé et fixé, au moins partiellement, à la masse de coulée (29).

14. Dispositif de mesure de pression selon la revendication 13, **caractérisé en ce qu'**un espace intérieur (37) formé à l'intérieur de la cellule de mesure de pression (9) peut être soumis à une pression de référence par l'intermédiaire d'un flexible (39), tandis que ce flexible (39) mène à un tube fixe (45) qui traverse une plaque de base (41) constituant une partie du support.

15. Dispositif de mesure de pression selon la revendication 14, **caractérisé en ce qu'**au moins la région de raccordement du flexible (39) est également enrobée de masse de coulée (29) exempte de verre, à l'extrémité du tube fixe (45) faisant saillie au-dessus de la plaque de base (41).

16. Dispositif de mesure de pression selon la revendication 14 ou 15, **caractérisé en ce que** les fils de passage à travers le verre (47) traversent également la plaque de base (41) en étant isolés les uns par rapport aux autres.

17. Dispositif de mesure de pression selon l'une des rvendications 1 à 16, **caractérisé en ce que** la masse de coulée exempte de verre est constituée de résine époxyde, et en particulier de résine époxyde dure.

FIG.1

FIG.2

FIG.3

FIG.4